(19) Europäisches Patentamt
European Patent Office
Office européen des brevets

(11) **EP 1 249 916 A1**

(12) **EUROPÄISCHE PATENTANMELDUNG**

(43) Veröffentlichungstag:
**16.10.2002 Patentblatt 2002/42**

(51) Int Cl.$^7$: **H02J 3/18**

(21) Anmeldenummer: **01810352.3**

(22) Anmeldetag: **09.04.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ABB RESEARCH LTD.**
**8050 Zürich (CH)**

(72) Erfinder:
• **Gerhard, Bilal**
  **5404 Dättwil (CH)**
• **Chandorkar, Mukul**
  **Mumbai (IN)**

(74) Vertreter: **ABB Patent Attorneys**
**c/o ABB Schweiz AG**
**Brown Boveri Strasse 6**
**5400 Baden (CH)**

(54) **Verfahren zum Betrieb einer Spannungserhaltungseinrichtung sowie Vorrichtung zur Durchführung des Verfahrens**

(57) Es wird ein Verfahren zum Betrieb einer Spannungserhaltungseinrichtung (1) angegeben, bei dem ein Wechselrichter (4) der Spannungserhaltungseinrichtung (1) mittels aus einer Referenzeinspeisespannung ($U_{ein,ref}$) gebildeten Ansteuersignalen ($S_a$) angesteuert wird und eine Einspeisespannung ($U_{ein}$) für eine der Phasen (R, S, T) eines elektrischen Wechselspannungsnetzes erzeugt, wobei die Summe zwischen der Einspeisespannung ($U_{ein}$) und einer Netzspannung ($U_N$) des elektrischen Wechselspannungsnetzes einer an einer der Phasen (R, S, T) anliegenden Phasenspannung ($U_{phase}$) entspricht. Weiterhin wird die Referenzeinspeisespannung ($U_{ein,ref}$) durch einen von der Einspeisespannung ($U_{ein}$) und von der Netzspannung ($U_N$) eingeschlossen ersten Phasenwinkel (β) und durch einen Referenzeinspeisespannungsamplitudenwert ($|U_{ein,ref}|$) gebildet. Der erste Phasenwinkel (β) wird bei einem Referenzeinspeisespannungsamplitudenwert ($|U_{ein,ref}|$) unterhalb eines einstellbaren Schwellwertes ($|U_{ein,refS}|$) und vor Erreichen eines Minimums einer vom Wechselrichter (4) abgegebenen Leistung ($P_{ein}$) variiert. Darüber hinaus wird bei Erreichen des Schwellwertes ($|U_{ein,refs}|$) des Referenzeinspeisespannungsamplitudenwertes ($|U_{ein,ref}|$) oder bei Erreichen des Minimums der abgegebenen Leistung ($P_{ein}$) der aktuelle Wert des ersten Phasenwinkels (β) festgehalten wird. Ferner wird eine Vorrichtung zur Durchführung des Verfahrens offenbart.

Fig. 1

**EP 1 249 916 A1**

## Beschreibung

### Technisches Gebiet

Die vorliegende Erfindung bezieht sich auf das Gebiet der Leistungselektronik. Sie betrifft ein Verfahren zum Betrieb einer Spannungserhaltungseinrichtung sowie eine Vorrichtung zur Durchführung des Verfahrens gemäss dem Oberbegriff der unabhängigen Ansprüche.

### Stand der Technik

Herkömmliche Spannungserhaltungseinrichtungen werden heute hauptsächlich zur Kompensation von Spannungseinbrüchen der Netzspannung, infolge von Kurzschlüssen oder Lastwechseln, in einem elektrischen Wechselspannungsnetz eingesetzt. Eine geeignete Spannungserhaltungseinrichtung ist beispielsweise in der US 5,329,222 angegeben. Darin ist ein Speicherkondensator gleichspannungsseitig mit einem Wechselrichter verbunden, der wechselspannungsseitig an eine Sekundärseite eines Transformators angeschlossen ist. Die Primärseite des Transformators ist in eine der Phasen des elektrischen Wechselspannungsnetzes eingeschaltet.

Der Wechselrichter wird durch eine Regelungseinrichtung angesteuert, wobei der Wechselrichter eine Einspeisespannung, die eine Wechselspannung ist, im Falle eines Spannungseinbruchs in der Netzspannung erzeugt. Diese Einspeisespannung dient der Kompensation der eingebrochenen Netzspannung, wobei die erzeugte Einspeisespannung zu der eingebrochenen Netzspannung addiert wird, so dass eine an der Phase anliegende Phasenspannung unbeeinflusst bleibt und damit unverändert erhalten werden kann. Die Spannung, insbesondere die Phasenspannung kann somit für den weiteren Verlauf der Phase erhalten werden. Die Regelungseinrichtung erzeugt dazu eine Referenzeinspeisespannung, die in einer herkömmlichen Ansteuerschaltung mittels eines Modulators, insbesondere eines Pulsweitenmodulators, in Ansteuersignale für die Leistungshalbleiterschalter des Wechselrichters umwandelt wird und somit den Wechselrichter ansteuert. Der Wechselrichter schaltet dann entsprechend den Ansteuersignalen die an seiner Gleichspannungsseite anliegende Gleichspannung des Speicherkondensators und erzeugt an seiner Wechselspannungsseite die Einspeisespannung. Die Einspeisespannung wird schliesslich über den Transformator in die Phase des elektrischen Versorgungsnetzes eingespeist.

Zur Erzeugung der Referenzeinspeisespannung ist in der Regelungseinrichtung ein Suchalgorithmus implementiert, der den Phasenwinkel zwischen der eingebrochenen Netzspannung und der zu erhaltenden Phasenspannung variiert und zusätzlich die Amplitude der Referenzeinspeisespannung entsprechend der zur Erhaltung der Phasenspannung benötigten Einspeisespannung generiert. Der Phasenwinkel zwischen der Phasenspannung und der eingebrochenen Netzspannung und die dazu generierte Amplitude der Referenzeinspeisespannung bildet die Phaselage beziehungsweise die Amplitude der Referenzeinspeisespannung. Bei der Variation des Phasenwinkels wird gleichzeitig die vom Wechselrichter abgegebene Leistung in der Regelungseinrichtung berechnet, wobei diese Leistung eine Funktion des Phasenwinkels ist. Damit die vom Wechselrichter abzugebende Leistung möglichst gering gehalten werden kann, wird die Variation des Phasenwinkels langsam nach Massgabe eines Minimums der abzugebenden Leistung durchgeführt, bis dieses Minimum erreicht ist. Entsprechend diesem nach Massgabe des Leistungsminimums entsprechend eingestellten Phasenwinkel wird die Amplitude der Referenzeinspeisespannung generiert, wobei der Phasenwinkel und die zugehörige Amplitude der Referenzeinspeisespannung, wie vorstehend beschrieben, die Referenzeinspeisespannung bilden. Die Spannungserhaltungseinrichtung, insbesondere der Wechselrichter wird somit immer nach Massgabe einer möglichst geringen Leistungsabgabe betrieben.

Problematisch bei einem solchen Betrieb der Spannungserhaltungseinrichtung ist, dass zum Erreichen des Leistungsminimums eine sehr hohe Einspeisespannung notwendig ist. Dadurch müssen der Wechselrichter und in besonderem Masse der Transformator für diese hohe Spannung ausgelegt werden. Dies erfordert jedoch einen erheblichen Platzbedarf und verursacht wesentliche Materialkosten sowie Isolationskosten. Wie in der US 5,329,222 weiterhin angegeben ist, muss der Speicherkondensator ebenfalls sehr gross bezüglich seiner Baugrösse und Kapazität ausgelegt werden, damit die geforderte grosse Einspeisespannung erreicht werden kann. Ein solcher Speicherkondensator verursacht aber weitere Materialkosten und benötigt zusätzlichen Platz.

### Darstellung der Erfindung

Aufgabe der Erfindung ist es deshalb, ein Verfahren zum Betrieb einer Spannungserhaltungseinrichtung anzugeben, bei dem auf eine hohe Einspeisespannung der Spannungserhaltungseinrichtung bei möglichst kleiner Leistungsabgabe verzichtet werden kann sowie eine Vorrichtung anzugeben, mit der das Verfahren in besonders einfacher Weise durchgeführt wird. Diese Aufgabe wird durch die Merkmale des Anspruchs 1 und 11 gelöst. In den Unteransprüchen sind vorteilhafte Weiterbildungen der Erfindung angegeben.

Beim erfindungsgemässen Verfahren zum Betrieb einer Spannungserhaltungseinrichtung wird ein Wechselrichter der Spannungserhaltungseinrichtung bei Auftreten eines Spannungseinbruchs oder einer Spannungsüberhöhung durch die Erfindung auch in der Netzspannung eines elektrischen Wechselspannungsnetzes mittels aus einer Referenzeinspeisespannung gebildeten Ansteuersignalen angesteuert und eine Einspeisespannung für eine der Phasen des elektrischen Wechselspannungsnetzes erzeugt. Die Summe zwischen der Einspeisespannung und der Netzspannung des elektrischen Wechselspannungsnetzes entspricht dabei einer an einer der Phasen anliegenden Phasenspannung. Erfindungsgemäss wird die Referenzeinspeisespannung durch einen von der Einspeisespannung und von der Netzspannung eingeschlossen ersten Phasenwinkel und durch einen Referenzeinspeisespannungsamplitudenwert gebildet, wobei der erste Phasenwinkel bei einem Referenzeinspeisespannungsamplitudenwert unterhalb eines einstellbaren Schwellwertes und vor Erreichen eines Minimums einer vom Wechselrichter abgegebenen Leistung variiert wird. Durch diese Massnahme wird erreicht, dass die Referenzeinspeisespannung entsprechend der zur Erhaltung der Phasenspannung benötigten Einspeisespannung so generiert wird, dass die Einspeisespannung besonders einfach und schnell auf einen kleinen Einspeisespannungsamplitudenwert bei gleichzeitig kleiner Leistungsabgabe des Wechselrichters eingestellt werden kann, wobei eine erwünschte Kompensation der beispielweise eingebrochen Netzspannung erzielt wird und die Phasenspannung somit trotz des Netzspannungseinbruchs erhalten werden kann. Dabei werden der Wechselrichter und ein zur Einspeisung der Einspeisespannung vorgesehener Transformator leistungsmässig nur sehr gering belastet.

Darüber hinaus wird erfindungsgemäss bei Erreichen des Schwellwertes des Referenzeinspeisespannungsamplitudenwertes oder bei Erreichen des Minimums der abgegebenen Leistung der aktuelle Wert des ersten Phasenwinkels festgehalten. Durch dieses Festhalten des ersten Phasenwinkels kann vorteilhaft ein beliebiges Ansteigen des Einspeisespannungsamplitudenwertes durch Erzeugen einer entsprechenden Referenzeinspeisespannung vermieden werden, wobei aber nachwievor eine Kompensation der beispielsweise eingebrochenen Netzspannung erzielt wird und die Phasenspannung bei einem Netzspannungseinbruch erhalten werden kann. Besonders vorteilhaft werden der Wechselrichter und der Transformator nicht durch einen grossen Einspeisespannungsamplitudenwert stark belastet, wodurch der Wechselrichter und der Transformator für einen kleine Einspeisespannungsamplitudenwert ausgelegt werden können, so dass Platz und Material eingespart werden kann. Der Wechselrichter und der Transformator müssen somit lediglich so ausgelegt werden, dass die bei Erreichen des Schwellwertes benötigte Leistung zur Einstellung des entsprechenden Einspeisamplitudenwertes bereitgestellt und übertragen werden kann. Ein weiterer Vorteil des erfindungsgemässen Verfahrens besteht darin, dass ein mit dem Wechselrichter gleichspannungsseitig verbundener elektrischer Energiespeicher ebenfalls nur auf einen kleinen Einspeisesspannungsamplitudenwert sowie auf eine kleine abzugebende Leistung ausgelegt werden muss, so dass eine weitere Verbesserung durch Material- und damit Kosteneinsparung erzielt werden kann.

Die erfindungsgemässe Vorrichtung zur Durchführung des Verfahrens zum Betrieb einer Spannungserhaltungseinrichtung weist eine der Erzeugung der Referenzeinspeisespannung dienende Regelungseinrichtung auf, die über eine Ansteuerschaltung zur Bildung von Ansteuersignalen mit dem Wechselrichter verbunden ist. Der Wechselrichter ist gleichspannungsseitig mit dem elektrischen Energiespeicher und wechselspannungsseitig über den Transformator mit einer Phase eines elektrischen Wechselspannungsnetzes verbunden und erzeugt die Einspeisespannung für eine der Phasen. Weiterhin umfasst die Regeleinrichtung der erfindungsgemässen Vorrichtung einen ersten Funktionsgenerator zur Bildung der Referenzeinspeisespannung und des Referenzeinspeisespannungsamplitudenwertes, einen Phasenwinkelgenerator zur Variation des ersten Phasenwinkels, eine erste Überwachungseinrichtung zur Überwachung des Referenzeinspeisespannungsamplitudenwertes auf einen Schwellwert und eine zweite Überwachungseinrichtung zur Überwachung der vom Wechselrichter abgegeben Leistung. Die erfindungsgemässe Vorrichtung zur Durchführung des Verfahrens zum Betrieb einer Spannungserhaltungseinrichtung ist somit sehr einfach und kostengünstig realisierbar, da der Schaltungsaufwand äusserst gering gehalten werden kann und zudem nur eine geringe Anzahl an Bauelementen für den Aufbau benötigt wird.

Diese und weitere Aufgaben, Vorteile und Merkmale der vorliegenden Erfindung werden aus der nachfolgenden detaillierten Beschreibung eines bevorzugten Ausführungsbeispiels der Erfindung in Verbindung mit der Zeichnung offensichtlich.

**Kurze Beschreibung der Zeichnungen**

Es zeigen:

Fig. 1 eine Ausführungsform einer erfindungsgemässen Vorrichtung zum Betrieb einer Spannungserhaltungseinrichtung und

Fig. 2 ein Zeigerdiagramm der für den Betrieb der Spannungserhaltungseinrichtung relevanten Spannungen.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebene Ausführungsform steht beispielhaft für den Erfindungsgegenstand und hat keine beschränkende Wirkung.

## Wege zur Ausführung der Erfindung

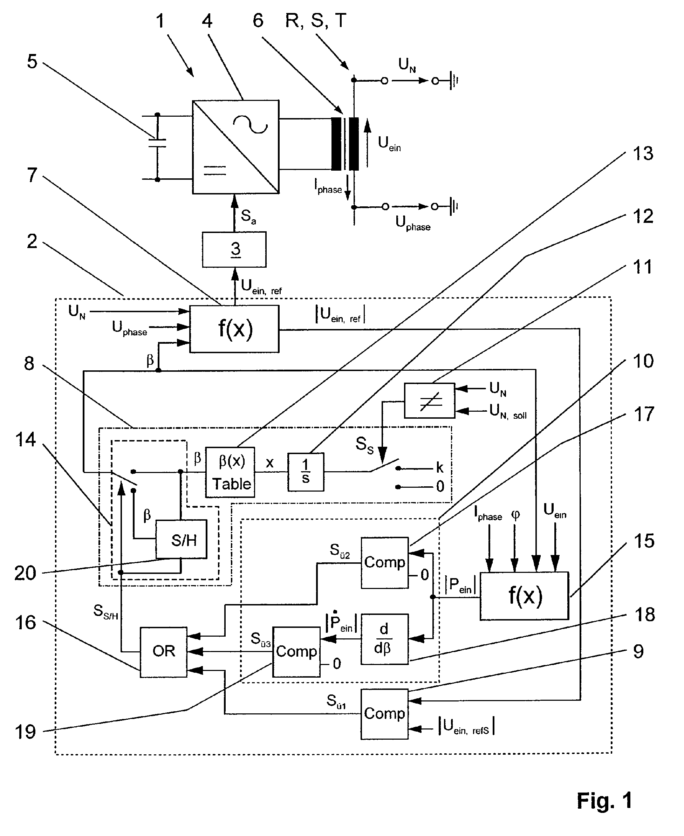

In Fig. 1 ist eine Ausführungsform einer erfindungsgemässen Vorrichtung zum Betrieb einer Spannungserhaltungseinrichtung 1 gezeigt. Die Spannungserhaltungseinrichtung 1 weist einen elektrischen Energiespeicher 5 auf, der insbesondere als Speicherkondensator ausgeführt ist. Der elektrische Energiespeicher 5 ist gleichspannungsseitig mit einem Wechselrichter 4 verbunden, der wechselspannungsseitig über einen Transformator 6 mit einer Phase R, S, T eines elektrischen Wechselspannungsnetzes verbunden ist.

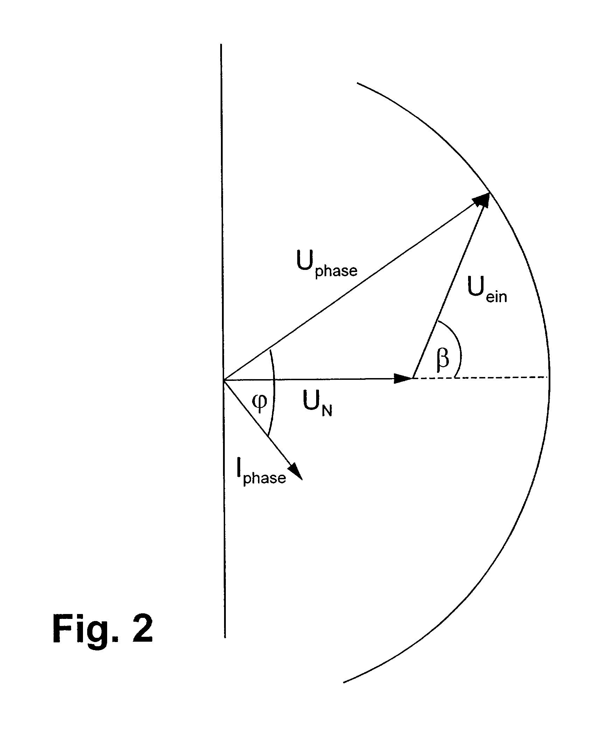

Beim erfindungsgemässen Verfahren zum Betrieb der Spannungserhaltungseinrichtung 1 wird der Wechselrichter 4 mittels aus einer Referenzeinspeisespannung $U_{ein, ref}$ gebildeten Ansteuersignalen $S_a$ angesteuert und eine Einspeisespannung $U_{ein}$ entsprechend der Referenzeinspeisespannung $U_{ein, ref}$ für eine der Phasen R, S, T erzeugt. Diese vom Wechselrichter erzeugte Einspeisespannung $U_{ein}$ liegt an der in die Phase R, S, T eingeschalteten Seite des Transformators 6 an. Gemäss einem in Fig. 2 gezeigten Zeigerdiagramm der für den Betrieb der Spannungserhaltungseinrichtung 1 relevanten Spannungen entspricht die Summe zwischen der Einspeisespannung $U_{ein}$ und einer Netzspannung $U_N$ des elektrischen Wechselspannungsnetzes einer an einer der Phasen R, S, T anliegenden Phasenspannung $U_{phase}$.

Erfindungsgemäss wird die Referenzeinspeisespannung $U_{ein, ref}$ durch einen von der Einspeisespannung $U_{ein}$ und von der Netzspannung $U_N$ eingeschlossen ersten Phasenwinkel $\beta$ und durch einen Referenzeinspeisespannungsamplitudenwert $|U_{ein, ref}|$ gebildet. Vorzugsweise erfolgt die Bildung nach Massgabe der Formel

$$U_{ein,ref} = |U_{ein,ref}| \cdot \sin(\omega t + \beta),$$

wobei $\omega$ eine Kreisfrequenz und t eine fortlaufende Zeit ist. Der Referenzeinspeisespannungsamplitudenwert $|U_{ein, ref}|$ wird zudem vorteilhaft nach Massgabe der Formel

$$|U_{ein,ref}| = -|U_N|\cos(\beta) + \sqrt{|U_N|^2\cos^2(\beta) - (|U_N|^2 - |U_{phase}|^2)}$$

berechnet. Desweiteren wird der erste Phasenwinkel $\beta$ erfindungsgemäss bei einem Referenzeinspeisespannungsamplitudenwert $|U_{ein, ref}|$ unterhalb eines einstellbaren Schwellwertes $|U_{ein, refS}|$ und vor Erreichen eines Minimums einer vom Wechselrichter 4 abgegebenen Leistung $P_{ein}$ variiert. Mittels dieser Variation wird vorteilhaft erreicht, dass die Referenzeinspeisespannung $U_{ein, ref}$ entsprechend der zur Erhaltung der Phasenspannung $U_{phase}$ benötigten Einspeisespannung $U_{ein}$ so erzeugt wird, dass die Einspeisespannung $U_{ein}$ besonders einfach und schnell auf einen kleinen Einspeisespannungsamplitudenwert $|U_{ein}|$ bei gleichzeitig kleiner Leistungsabgabe des Wechselrichters 4 eingestellt werden kann, wobei eine erwünschte Kompensation der beispielweise eingebrochen Netzspannung $U_N$ erzielt wird und die Phasenspannung $U_{phase}$ trotz des Netzspannungseinbruchs erhalten werden kann. Zudem wird der Wechselrichter 4 und der zur Einspeisung der Einspeisespannung $U_{ein}$ vorgesehener Transformator 6 leistungsmässig nur sehr gering belastet. Weiterhin braucht der elektrischer Energiespeicher 5 nur auf einen kleinen Einspeisesspannungsamplitudenwert $|U_{ein}|$ sowie auf eine kleine abzugebende Leistung ausgelegt werden, so dass eine Materialund damit Kosteneinsparung erzielt werden kann. Bei einem als Speicherkondensator ausgeführten elektrischen Energiespeicher 5 wird diese Auslegung vorteilhaft durch einen für die Energiespeicherung bestimmenden reduzierten Kapazitätswert erreicht.

Der Start der Variation des ersten Phasenwinkels $\beta$ erfolgt auf die Ausgabe eines Startsignals $S_s$ hin. Dieses Startsignal $S_s$ wird dann ausgegeben, wenn die Netzspannung $U_N$, die auf eine Sollnetzspannung $U_{N, soll}$ hin überwacht wird, wesentlich von der Sollnetzspannung $U_{N, soll}$ abweicht.

Nachfolgend wird die Variation des ersten Phasenwinkels $\beta$ beschrieben. Auf das Startsignal $S_s$ hin wird ein Zahlenwert x fortlaufend hochgezählt und der in einer Tabelle jeweils einem der Zahlenwerte x zugeordnet abgelegte erste Phasenwinkel $\beta$ fortlaufend in Abhängigkeit des Zahlenwertes x ausgelesen. Vorteilhaft ist der erste Phasenwinkel $\beta$ in Abhängigkeit der Einspeisespannung $U_{ein}$, der Phasenspannung $U_{phase}$ und des Zahlenwerts x nach Massgabe der Formel

$$\beta = \arcsin\left(\frac{|U_{phase}| \cdot \sin(x)}{|U_{ein}|}\right)$$

gebildet, so dass die im Zeigerdiagramm gemäss Fig. 2 gezeigten Beziehungen zwischen der Einspeisespannung $U_{ein}$ und der Phasenspannung $U_{phase}$ gelten.

Darüber hinaus wird beim erfindungsgemässen Verfahren bei Erreichen des Schwellwertes $|U_{ein, refS}|$ des Referenzeinspeisespannungsamplitudenwertes $|U_{ein, ref}|$ oder bei Erreichen des Minimums der abgegebenen Leistung $P_{ein}$ des Wechselrichters 4 der aktuelle Wert des ersten Phasenwinkels β festgehalten. Durch dieses Festhalten des ersten Phasenwinkels β kann vorteilhaft ein beliebiges Ansteigen des Einspeisespannungsamplitudenwertes $|U_{ein}|$ durch Erzeugen einer entsprechenden Referenzeinspeisespannung $U_{ein, ref}$ vermieden werden, so dass der Wechselrichter 4 vorteilhaft weder einen grossen Einspeisespannungsamplitudenwert $|U_{ein}|$ erzeugen muss, noch der Wechselrichter 4 und der Transformator 6 durch einen solchen grossen Einspeisespannungsamplitudenwert $|U_{ein}|$ belastet werden. Der Wechselrichter 4 und der Transformator 6 können somit für einen kleine Einspeisespannungsamplitudenwert $|U_{ein}|$ ausgelegt werden, insbesondere auf einen kleineren Einspeisespannungsamplitudenwert $|U_{ein}|$, als wenn wie aus dem Stand der Technik bekannt stets eine minimale Leistungsabgabe des Wechselrichters 4 erreicht werden soll. Dadurch kann äusserst vorteilhaft Platz und Material des Wechselrichters 4 und des Transformators 6 eingespart werden kann. Eine Kompensation der beispielsweise eingebrochenen Netzspannung wird nachwievor erzielt, damit die Phasenspannung bei einem Netzspannungseinbruch erhalten werden kann.

Im folgenden wird das Festhalten des aktuellen Werts des ersten Phasenwinkels β aufgrund der vorstehend beschriebenen Kriterien detailliert erläutert. Zur Feststellung, ob der Referenzeinspeisespannungsamplitudenwert $|U_{ein, ref}|$ den Schwellwert $|U_{ein, refS}|$ bereits erreicht hat, wird zunächst der Referenzeinspeisespannungsamplitudenwert $|U_{ein, ref}|$ aus der Netzspannung $U_N$, aus der Phasenspannung $U_{phase}$ und dem ersten Phasenwinkel β nach Massgabe der Formel

$$|U_{ein,ref}| = -|U_N|\cos(\beta) + \sqrt{|U_N|^2 \cos^2(\beta) - (|U_N|^2 - |U_{phase}|^2)}$$

erfindungsgemäss berechnet. Danach wird der Referenzeinspeisespannungsamplitudenwert $|U_{ein, ref}|$ auf den Schwellwert $|U_{ein, refS}|$ hin überwacht, wobei bei wesentlicher Übereinstimmung der beiden Werte ein erstes Überwachungssignal $S_{ü1}$ ausgegeben wird. Zudem wird zur Feststellung, ob die abgegebenen Leistung $P_{ein}$ des Wechselrichters 4 bereits ihr Minimum erreicht hat, ein Leistungsamplitudenwert $|P_{ein}|$ der vom Wechselrichter 4 abgegebenen Leistung $P_{ein}$ aus der Einspeisespannung $U_{ein}$, aus einem Phasenstrom $I_{phase}$, aus der Phasenspannung $U_{phase}$, aus dem ersten Phasenwinkel β und aus einem von der Phasenspannung $U_{phase}$ und dem Phasenstrom $I_{phase}$ eingeschlossenen zweiten Phasenwinkel (φ) nach Massgabe der Formel

$$|P_{ein}| = 3 \cdot |U_{ein}| \cdot |I_{phase}| \cdot \cos(\beta + \varphi - \arcsin(\frac{|U_{ein}| \cdot \sin(\beta)}{|U_{phase}|}))$$

berechnet. Danach wird der Leistungsamplitudenwert $|P_{ein}|$ auf einen Wert Null hin überwacht wird und bei einer wesentlichen Übereinstimmung des Leistungsamplitudenwertes $|P_{ein}|$ mit dem Wert Null ein zweites Überwachungssignal $S_{ü2}$ ausgegeben. Der Wert Null stellt den untersten Wert des Minimums des Leistungsamplitudenwertes $|P_{ein}|$ dar, wobei der Leistungsamplitudenwert $|P_{ein}|$ in vorstehender erläuterter Weise vorteilhaft auf diesen Wert hin überwacht wird. Für die Überwachung eines Minimums des Leistungsamplitudenwertes $|P_{ein}|$ grösser als Null wird der Leistungsamplitudenwert $|P_{ein}|$ zunächst nach dem ersten Phasenwinkel β abgeleitet, so dass $|\dot{P}_{ein}| = \frac{d}{d\beta}(|P_{ein}|)$ gilt. Anschliessend wird der abgeleitete Leistungsamplitudenwert $|\dot{P}_{ein}|$ auf einen Wert Null hin überwacht und bei einer wesentlichen Übereinstimmung des abgeleiteten Leistungsamplitudenwertes $|\dot{P}_{ein}|$ mit dem Wert Null ein drittes Überwachungssignal $S_{ü3}$ ausgeben.

Für das Festhalten des aktuellen Wertes des ersten Phasenwinkels β werden desweiteren das erste Überwachungssignal $S_{ü1}$, das zweite Überwachungssignal $S_{ü2}$ und das dritte Überwachungssignal $S_{ü3}$ ODER-verknüpft, wodurch ein Abtast-Halteauslösesignal $S_{S/H}$ erzeugt und ausgegeben wird. Auf die Ausgabe dieses Abtast-Halteauslösesignals $S_{S/H}$ hin wird dann der bis dahin variierte erste Phasenwinkel β festgehalten, so dass der aktuelle Wert des ersten Phasenwinkel β erwünschtem Masse gewonnen werden kann.

Das erfindungsgemässe Verfahren für den Betrieb der Spannungserhaltungseinrichtung 1 Leistungshalbleiterschalters 1 beschränkt sich nicht nur auf beispielhaft beschriebene Kompensationen von Spannungseinbrüchen in der Netzspannung $U_N$, sondern kann ebenso beispielsweise für die Kompensation von Spannungsspitzen der Netzspannung $U_N$ oberhalb der Sollnetzspannung $U_{N, soll}$ eingesetzt werden.

Die erfindungsgemäss Vorrichtung zur Durchführung des Verfahrens weist gemäss der in Fig. 1 dargestellten Ausführungsform eine Regelungseinrichtung 2 auf, die der Erzeugung der Referenzeinspeisespannung $U_{ein, ref}$ dient. Die Regelungseinrichtung 2 ist über eine Ansteuerschaltung 3 zur Bildung von Ansteuersignalen $S_a$ mit dem Wechselrichter 4 verbunden, wobei der Wechselrichter 4, wie bereits erwähnt, gleichspannungsseitig mit dem elektrischen Energiespeicher 5 und wechselspannungsseitig über den Transformator 6 mit einer Phase R, S, T des elektrischen Wechselspannungsnetzes verbunden ist. Die Ansteuerschaltung 2 erhält von der Regelungseinrichtung 2 die erzeugte Referenzeinspeisespannung $U_{ein, ref}$ und wandelt diese in die Ansteuersignale $S_a$ für die Leistungshalbleiterschalter des Wechselrichters 4 um, die dann dem Wechselrichter vorgegeben werden. Der Wechselrichter 4 schaltet entsprechend den Ansteuersignalen $S_a$ die an seiner Gleichspannungsseite anliegende Gleichspannung des elektrischen Energiespeichers 5 und erzeugt die Einspeisespannung $U_{ein}$ für eine der Phasen R, S, T.

Die Regelungseinrichtung 2 der erfindungsgemässen Vorrichtung umfasst ferner einen ersten Funktionsgenerator 7 zur Bildung der Referenzeinspeisespannung $U_{ein, ref}$ und des Referenzeinspeisespannungsamplitudenwertes $|U_{ein, ref}|$. Dem ersten Funktionsgenerator 7 sind der erste Phasenwinkel β, die Netzspannung $U_N$ und die Phasenspannung $U_{Phase}$ zugeführt, wobei der erste Funktionsgenerator die Referenzeinspeisespannung $U_{ein, ref}$ und den Referenzeinspeisespannungsamplitudenwert $|U_{ein, ref}|$ nach Massgabe der bereits angegebenen Formeln berechnet. Am Ausgang des ersten Funktionsgenerators 7 liegen gemäss Fig. 1 die Referenzeinspeisespannung $U_{ein, ref}$ und der Referenzeinspeisespannungsamplitudenwert $|U_{ein, ref}|$ an.

Gemäss Fig. 1 umfasst die Regelungseinrichtung 2 erfindungsgemäss eine erste Überwachungseinrichtung 9 zur Überwachung des Referenzeinspeisespannungsamplitudenwertes $|U_{ein, ref}|$ auf den Schwellwert $|U_{ein, refS}|$ hin. Zum Zwecke dieser Überwachung sind der ersten Überwachungseinrichtung 9 der Referenzeinspeisespannungsamplitudenwert $|U_{ein, ref}|$ und der Schwellwert $|U_{ein, refS}|$ eingangsseitig zugeführt, wobei ausgangsseitig das erste Überwachungssignal $S_{ü1}$ anliegt. Ferner weist die Regelungseinrichtung 2 erfindungsgemäss eine zweite Überwachungseinrichtung 10 auf, die der Überwachung der vom Wechselrichter 4 abgegeben Leistung $P_{ein}$ auf ein Minimum hin dient. Der zweiten Überwachungseinrichtung 10 ist dazu der Leistungsamplitudenwert $|P_{ein}|$ eingangseitig zugeführt, der in einem zweiten Funktionsgenerator 15 nach Massgabe der bereits angegebenen Formel aus der Einspeisespannung $U_{ein}$, aus dem Phasenstrom $I_{phase}$, aus der Phasenspannung $U_{phase}$, aus dem erste Phasenwinkel β und aus dem zweiten Phasenwinkel φ berechnet wird. Die für die Berechnung des Leistungsamplitudenwertes $|P_{ein}|$ vorstehend genannten Grössen sind dem zweiten Funktionsgenerator 15 eingangsseitig zugeführt, wobei am Ausgang des zweiten Funktionsgenerators 15 der Leistungsamplitudenwert $|P_{ein}|$ anliegt. Die zweite Überwachungseinrichtung 10 weist einen ersten Komparator 17 auf, dem der Leistungsamplitudenwert $|P_{ein}|$ und der Wert Null eingangsseitig zugeführt sind. Dieser erste Komparator 17 dient der bereits beschriebenen Überwachung des Leistungsamplitudenwertes $|P_{ein}|$ auf den Wert Null hin, wobei gemäss Fig. 1 am Ausgang des ersten Komparators 17 das zweite Überwachungssignal $S_{ü2}$ anliegt. Weiterhin umfasst die zweite Überwachungseinrichtung 10 einen Differenzierer 18, dem der Leistungsamplitudenwert $|P_{ein}|$ eingangsseitig zugeführt ist. Dieser Differenzierer 18 dient der Ableitung des Leistungsamplitudenwertes $|P_{ein}|$ nach dem ersten Phasenwinkel β, wobei gemäss Fig. 1 am Ausgang des Differenzierers 18 der abgeleitete Leistungsamplitudenwert $|\dot{P}_{ein}|$ anliegt. Der abgeleitete Leistungsamplitudenwert $|\dot{P}_{ein}|$ sowie ein Wert Null sind einem zweiten Komparator 19 der zweiten Überwachungseinrichtung 10 eingangsseitig zugeführt, wobei der zweite Komparator 19 der bereits erwähnten Überwachung des abgeleiteten Leistungsamplitudenwertes $|\dot{P}_{ein}|$ auf den Wert Null hin dient. Am Ausgang des zweiten Komparators 19 liegt gemäss Fig. 1 das dritte Überwachungssignal $S_{ü3}$ an. Die Ausgabe des ersten Überwachungssignals $S_{ü1}$ der ersten Überwachungseinrichtung 9, des zweiten Überwachungssignals $S_{ü2}$ und des dritten Überwachungssignals $S_{ü3}$ der zweiten Überwachungseinrichtung 10 erfolgen nach den bereits beim erfindungsgemässen Verfahren beschriebenen Kriterien. Für diese Ausgabe ist die erste Überwachungseinrichtung 9 und die zweite Überwachungseinrichtung 10 jeweils ausgangsseitig mit einem Eingang einer Logikschaltung 16 verbunden sind. Diese Logikschaltung 16 weist zur Erzeugung des Abtast-Halteauslösesignals $S_{S/H}$ aus dem ersten Überwachungssignal $S_{ü1}$, dem zweiten Überwachungssignal $S_{ü2}$ und dem dritten Überwachungssignal $S_{ü3}$ eine ODER-Verknüpfung auf, die die Signale miteinander logisch verknüpft. Weiterhin liegt gemäss Fig. 1 am Ausgang der Logikschaltung 16 das Abtast-Halteauslösesignal $S_{S/H}$ an.

Zur bereits beim erfindungsgemässen Verfahren erwähnten Variation des ersten Phasenwinkels β ist gemäss Fig. 1 ein Phasenwinkelgenerator 8 vorgesehen, an dessen Ausgang der erste Phasenwinkel β anliegt. Darüber hinaus ist ein Integrator 12 zur fortlaufenden Hochzählung des Zahlenwertes x vorgesehen, an dessen Ausgang der Zahlenwert x anliegt. Der Start des Integrators 2 erfolgt auf das Startsignal $S_s$ hin, das in einer dritten Überwachungseinrichtung 11 der Regelungseinrichtung 2 zur Überwachung der Netzspannung $U_N$ auf die Sollnetzspannung $U_{N, soll}$ hin nach dem bereits beim erfindungsgemässen Verfahren beschriebenen Kriterium generiert wird. Gemäss Fig. 1 sind der dritten Überwachungseinrichtung 11, die vorzugsweise als Äquivalenzvergleicher ausgeführt ist, eingangsseitig die Netzspannung $U_N$ und die Sollnetzspannung $U_{N, soll}$ zugeführt. Ausgangsseitig ist die dritte Überwachungseinrichtung 11 zur Ausgabe des Startsignals $S_s$ mit einem Eingang des Phasenwinkelgenerators 8 verbunden. Das ausgegebene Startsignal $S_s$ veranlasst den Start des Integrators 2 durch Anlegen eines beliebig einstellbaren Wertes k, der ungleich dem Wert Null ist.

Gemäss Fig. 1 ist der Ausgang des Integrators 2 zur Ausgabe des Zahlenwertes x mit dem Eingang eines Tabellenspeichers 13 des Phasenwinkelgenerators 8 verbunden. Zur fortlaufenden Auslesung des ersten Phasenwinkels β in Abhängigkeit des Zahlenwertes x ist der erste Phasenwinkel β in einer Tabelle des Tabellenspeichers 13 jeweils einem Zahlenwert x zugeordnet abgelegt. Der Phasenwinkel β ist nach Massgabe der bereits angegebenen Formel gebildet.

Am Ausgang des in Fig. 1 gezeigten Tabellenspeichers 13 liegt der ausgelesene Phasenwinkel $\beta$ an, wobei dieser Ausgang mit einem Eingang einer Abtast-Halteeinrichtung 14 des Phasenwinkelgenerators 8 verbunden ist. Weiterhin ist ein Ausgang der bereits erwähnten Logikschaltung 16 zur Ausgabe des Abtast-Halteauslösesignals $S_{S/H}$ mit einem weiteren Eingang der Abtast-Halteeinrichtung 14 verbunden. Das Abtast-Halteauslösesignal $S_{S/H}$ veranlasst gemäss Fig. 1 eine Aufschaltung eines in der Abtast-Halteeinrichtung 14 vorgesehnen Abtast-Haltegliedes 20 an den Ausgang der Abtast-Halteeinrichtung 14. Das Abtast-Halteglied 20 dient der fortlaufenden Abtastung und Abspeicherung des aus dem Tabellenspeicher 13 ausgelesenen Phasenwinkels $\beta$. Die Aufschaltung des Abtast-Haltegliedes 14 bewirkt, dass der aktuelle Wert des bis dahin variierten Phasenwinkels $\beta$ vorteilhaft für die bereits beschriebenen Kriterien erhalten werden kann. Am Ausgang der Abtast-Halteeinrichtung 14 liegt gemäss Fig. 1 der Phasenwinkel $\beta$ an, wobei es sich dabei um den variierten Phasenwinkel $\beta$ im Falle der beim erfindungsgemässen Verfahren bereits erwähnten Kriterien oder um den aktuellen Wert des Phasenwinkels $\beta$ im Falle der ebenfalls beim erfindungsgemässen Verfahren genannten Kriterien handelt. Gemäss Fig. 1 ist zur Zuführung des Phasenwinkels $\beta$ der Ausgang der Abtast-Halteeinrichtung 14 mit einem Eingang des ersten Funktionsgenerators 7 verbunden.

Die erfindungsgemässe Vorrichtung zeichnet sich durch einen sehr einfachen und kostengünstigen Aufbau aus, da der Schaltungsaufwand äusserst gering ist und zudem nur eine geringe Anzahl an Bauelementen für den Aufbau benötigt wird.

Eine weitere Verbesserung wird dadurch erreicht, dass die Vorrichtung in einem nicht dargestellten digitalen Mikroprozessor implementiert werden kann, so dass vorteilhaft beispielsweise auf diskrete Bauteile verzichtet werden kann und eine Anpassung der Vorrichtung an verschiedenste Spannungserhaltungseinrichtungen, erleichtert wird und somit einfach vollzogen werden kann.

Es versteht sich, dass der Fachmann andere als die im Ausführungsbeispiel angegebene Blöcke, Einheiten und Signale mit gleicher Wirkung verwenden kann.

**Bezugszeichenliste**

1       Spannungserhaltungseinrichtung
2       Regelungseinrichtung
3       Ansteuerschaltung
4       Wechselrichter
5       elektrischer Energiespeicher
6       Transformator
7       erster Funktionsgenerator
8       Phasenwinkelgenerator
9       erste Überwachungseinrichtung
10      zweite Überwachungseinrichtung
11      dritte Überwachungseinrichtung
12      Integrator
13      Tabellenspeicher
14      Abtast-Halteeinrichtung
15      zweiter Funktionsgenerator
16      Logikschaltung
17      erster Komparator
18      Differenzierer
19      zweiter Komparator
20      Abtast-Halteglied

**Patentansprüche**

**1.** Verfahren zum Betrieb einer Spannungserhaltungseinrichtung (1), bei dem ein Wechselrichter (4) der Spannungserhaltungseinrichtung (1) mittels aus einer Referenzeinspeisespannung ($U_{ein, ref}$) gebildeten Ansteuersignalen ($S_a$) angesteuert wird und eine Einspeisespannung ($U_{ein}$) für eine der Phasen (R, S, T) eines elektrischen Wechselspannungsnetzes erzeugt, wobei die Summe zwischen der Einspeisespannung ($U_{ein}$) und einer Netzspannung ($U_N$) des elektrischen Wechselspannungsnetzes einer an einer der Phasen (R, S, T) anliegenden Phasenspannung ($U_{phase}$) entspricht, **dadurch gekennzeichnet,**

**dass** die Referenzeinspeisespannung ($U_{ein, ref}$) durch einen von der Einspeisespannung ($U_{ein}$) und von der Netzspannung ($U_N$) eingeschlossen ersten Phasenwinkel ($\beta$) und durch einen Referenzeinspeisespannungsamplitudenwert ($|U_{ein, ref}|$) gebildet wird,

**dass** der erste Phasenwinkel ($\beta$) bei einem Referenzeinspeisespannungsamplitudenwert ($|U_{ein, ref}|$) unterhalb eines einstellbaren Schwellwertes ($|U_{ein, refS}|$) und vor Erreichen eines Minimums einer vom Wechselrichter (4) abgegebenen Leistung ($P_{ein}$) variiert wird, und

**dass** bei Erreichen des Schwellwertes ($|U_{ein, refS}|$) des Referenzeinspeisespannungsamplitudenwertes ($|U_{ein, ref}|$) oder bei Erreichen des Minimums der abgegebenen Leistung ($P_{ein}$) der aktuelle Wert des ersten Phasenwinkels ($\beta$) festgehalten wird.

2. Verfahren nach Anspruch 1, **dadurch gekennzeichnet, dass** die Referenzeinspeisespannung ($U_{ein, ref}$) nach Massgabe der Formel

$U_{ein,ref} = |U_{ein,ref}| \cdot \sin(\omega t + \beta)$ gebildet wird, wobei $\omega$ eine Kreisfrequenz und $t$ eine fortlaufende Zeit ist.

3. Verfahren nach Anspruch 1 oder 2, **dadurch gekennzeichnet, dass** die Netzspannung ($U_N$) auf eine Sollnetzspannung ($U_{N, soll}$) hin überwacht wird und

dass bei wesentlicher Abweichung der Netzspannung ($U_N$) von der Sollnetzspannung ($U_{N, soll}$) mit einer Variation des ersten Phasenwinkels ($\beta$) durch Ausgabe eines Startsignals ($S_s$) gestartet wird.

4. Verfahren nach Anspruch 3, **dadurch gekennzeichnet, dass** auf das Startsignal ($S_s$) hin ein Zahlenwert (x) fortlaufend hochgezählt wird und der in einer Tabelle jeweils einem der Zahlenwerte (x) zugeordnet abgelegte erste Phasenwinkel ($\beta$) fortlaufend in Abhängigkeit des Zahlenwertes (x) ausgelesen wird, wobei der erste Phasenwinkel ($\beta$) in Abhängigkeit der Einspeisespannung ($U_{ein}$), der Phasenspannung ($U_{phase}$) und des Zahlenwerts (x) nach Massgabe der Formel

$$\beta = \arcsin\left(\frac{|U_{phase}| \cdot \sin(x)}{|U_{ein}|}\right)$$

gebildet ist.

5. Verfahren nach einem der vorhergehenden Ansprüche, **dadurch gekennzeichnet, dass** der Referenzeinspeisespannungsamplitudenwert ($|U_{ein, ref}|$) aus der Netzspannung ($U_N$), aus der Phasenspannung ($U_{phase}$) und dem ersten Phasenwinkel ($\beta$) nach Massgabe der Formel

$$|U_{ein,ref}| = -|U_N|\cos(\beta) + \sqrt{|U_N|^2 \cos^2(\beta) - (|U_N|^2 - |U_{phase}|^2)}$$

berechnet wird.

6. Verfahren nach Anspruch 4, **dadurch gekennzeichnet, dass** der Referenzeinspeisespannungsamplitudenwert ($|U_{ein, ref}|$) auf den Schwellwert ($|U_{ein, refS}|$) hin überwacht wird und bei einer wesentlichen Übereinstimmung des Referenzeinspeisespannungsamplitudenwertes ($|U_{ein, ref}|$) mit dem Schwellwert ($|U_{ein, refS}|$) ein erstes Überwachungssignal ($S_{ü1}$) ausgeben wird.

7. Verfahren nach Anspruch 4, **dadurch gekennzeichnet, dass** ein Leistungsamplitudenwert ($|P_{ein}|$) der vom Wechselrichter (4) abgegebenen Leistung ($P_{ein}$) aus der Einspeisespannung ($U_{ein}$), aus einem Phasenstrom ($I_{phase}$), aus der Phasenspannung ($U_{phase}$), aus dem ersten Phasenwinkel ($\beta$) und aus einem von der Phasenspannung ($U_{phase}$) und von dem Phasenstrom ($I_{phase}$) eingeschlossenen zweiten Phasenwinkel ($\varphi$) nach Massgabe der Formel

$$|P_{ein}| = 3 \cdot |U_{ein}| \cdot |I_{phase}| \cdot \cos\left(\beta + \varphi - \arcsin\left(\frac{|U_{ein}| \cdot \sin\beta}{|U_{phase}|}\right)\right)$$

berechnet wird, und

dass der Leistungsamplitudenwert ($|P_{ein}|$) auf einen Wert Null hin überwacht wird und bei einer wesentlichen Übereinstimmung des Leistungsamplitudenwertes ($|P_{ein}|$) mit dem Wert Null ein zweites Überwachungssignal ($S_{ü2}$)

ausgegeben wird.

**8.** Verfahren nach Anspruch 7, **dadurch gekennzeichnet, dass** der Leistungsamplitudenwert ($|P_{ein}|$) nach dem ersten Phasenwinkel (β) abgeleitet wird, so dass $|\dot{P}_{ein}| = \frac{d}{d\beta}\beta(|P_{ein}|)$ gilt und dass der abgeleitete Leistungsamplitudenwert ($|\dot{P}_{ein}|$) auf einen Wert Null hin überwacht wird und bei einer wesentlichen Übereinstimmung des abgeleiteten Leistungsamplitudenwertes ($|\dot{P}_{ein}|$) mit dem Wert Null ein drittes Überwachungssignal ($S_{\ddot{u}3}$) ausgeben wird.

**9.** Verfahren nach den Ansprüchen 6 bis 8, **dadurch gekennzeichnet, dass** ein Abtast-Halteauslösesignal ($S_{S/H}$) durch ODER-Verknüpfen des ersten Überwachungssignals ($S_{u1}$), des zweiten Überwachungssignals ($S_{\ddot{u}2}$) und des dritten Überwachungssignals ($S_{\ddot{u}3}$) erzeugt und ausgegeben wird.

**10.** Verfahren nach Anspruch 9, **dadurch gekennzeichnet, dass** auf die Ausgabe des Abtast-Halteauslösesignal ($S_{S/H}$) hin der aktuelle Wert des ersten Phasenwinkels (β) festgehalten wird.

**11.** Vorrichtung zur Durchführung eines Verfahrens zum Betrieb einer Spannungserhaltungseinrichtung (1) mit einer der Erzeugung einer Referenzeinspeisespannung ($U_{ein, ref}$) dienenden Regelungseinrichtung (2), die über eine Ansteuerschaltung (3) zur Bildung von Ansteuersignalen ($S_a$) mit einem Wechselrichter (4) verbunden ist, wobei der Wechselrichter (4) gleichspannungsseitig mit einem elektrischen Energiespeicher (5) und wechselspannungsseitig über einen Transformator (6) mit einer Phase (R, S, T) eines elektrischen Wechselspannungsnetzes verbunden ist und eine Einspeisespannung ($U_{ein}$) für eine der Phasen (R, S, T) erzeugt, **dadurch gekennzeichnet, dass** die Regelungseinrichtung (2) umfasst

(a) einen ersten Funktionsgenerator (7) zur Bildung der Referenzeinspeisespannung ($U_{ein, ref}$) und eines Referenzeinspeisespannungsamplitudenwertes ($|U_{ein, ref}|$), dem ein von der Einspeisespannung ($U_{ein}$) und von einer Netzspannung ($U_N$) eingeschlossener ersten Phasenwinkel (β), die Netzspannung ($U_N$) und eine an einer der Phasen anliegende Phasenspannung ($U_{phase}$) zugeführt sind,
(b) einen Phasenwinkelgenerator (8) zur Variation des ersten Phasenwinkels (β), wobei am Ausgang des Phasenwinkelgenerators (8) der erste Phasenwinkel (β) anliegt,
(c) eine erste Überwachungseinrichtung (9) zur Überwachung des Referenzeinspeisespannungsamplitudenwertes ($|U_{ein, ref}|$) auf einen Schwellwert ($|U_{ein, refs}|$), wobei der ersten Überwachungseinrichtung (9) der Referenzeinspeisespannungsamplitudenwert ($|U_{ein, ref}|$) und der Schwellwert ($|U_{ein, refS}|$) eingangsseitig zugeführt sind und
(d) eine zweite Überwachungseinrichtung (10) zur Überwachung einer vom Wechselrichter abgegeben Leistung ($P_{ein}$) auf ein Minimum hin, wobei der zweiten Überwachungseinrichtung (10) ein Leistungsamplitudenwert ($|P_{ein}|$) eingangsseitig zugeführt ist.

**12.** Vorrichtung nach Anspruch 11, **dadurch gekennzeichnet, dass** der erste Funktionsgenerator (7) den Referenzeinspeisespannungsamplitudenwert ($|U_{ein, ref}|$) aus den zugeführten Grössen nach Massgabe der Formel

$$|U_{ein,ref}| = -|U_N|\cos(\beta) + \sqrt{|U_N|^2\cos^2(\beta) - (|U_N|^2 - |U_{phase}|^2)}$$

berechnet und die Referenzeinspeisespannung ($U_{ein, ref}$) nach Massgabe der Formel $U_{ein,ref} = |U_{ein,ref}| \cdot \sin(\omega t + \beta)$ bildet, wobei ω eine Kreisfrequenz und t eine fortlaufende Zeit ist, und dass der Referenzeinspeisespannungsamplitudenwert ($|U_{ein, ref}|$) und die Referenzeinspeisespannung ($U_{ein, ref}$) am Ausgang des ersten Funktionsgenerators (7) anliegen.

**13.** Vorrichtung nach Anspruch 11 oder 12, **dadurch gekennzeichnet, dass** die Regelungseinrichtung (2) eine dritte Überwachungseinrichtung (11) zur Überwachung der Netzspannung ($U_N$) auf eine Sollnetzspannung ($U_{N, soll}$) aufweist, der die Netzspannung ($U_N$) und die Sollnetzspannung ($U_{N, soll}$) eingangsseitig zugeführt sind und die ausgangsseitig zur Ausgabe eines Startsignals ($S_S$) mit einem Eingang des Phasenwinkelgenerators (8) verbunden ist.

**14.** Vorrichtung nach Anspruch 13, **dadurch gekennzeichnet, dass** der Phasenwinkelgenerator (8) einen zur fortlaufenden Hochzählung eines Zahlenwertes (x) vorgesehenen Integrator (12) aufweist, dessen Start auf das Startsignal ($S_S$) hin erfolgt und an dessen Ausgang der Zahlenwert (x) anliegt.

**15.** Vorrichtung nach Anspruch 14, **dadurch gekennzeichnet, dass** der Ausgang des Integrators () zur Ausgabe des Zahlenwertes (x) mit einem Eingang eines Tabellenspeichers (13) des Phasenwinkelgenerators (8) verbunden ist, und

dass der erste Phasenwinkel ($\beta$) zur fortlaufenden Auslesung in Abhängigkeit des Zahlenwertes (x) in einer Tabelle des Tabellenspeichers (13) jeweils einem der Zahlenwerte (x) zugeordnet abgelegt ist, wobei der erste Phasenwinkel ($\beta$) in Abhängigkeit der Einspeisespannung ($U_{ein}$), der Phasenspannung ($U_{phase}$) und des Zahlenwerts (x) nach Massgabe der Formel

$$\beta = \arcsin(\frac{|U_{phase}| \cdot \sin(x)}{|U_{ein}|})$$

gebildet ist.

16. Vorrichtung nach Anspruch 15, **dadurch gekennzeichnet, dass** der ausgelesene Phasenwinkel ($\beta$) am Ausgang des Tabellenspeichers (13) anliegt und der Ausgang des Tabellenspeichers (13) mit einem Eingang einer Abtast-Halteeinrichtung (14) des Phasenwinkelgenerators (8) verbunden ist.

17. Vorrichtung nach einem der Ansprüche 11 bis 16, **dadurch gekennzeichnet, dass** die Regelungseinrichtung (2) einen zweiten Funktionsgenerator (15) zur Berechnung des Leistungsamplitudenwert ($|P_{ein}|$) aufweist, dem die Einspeisespannung ($U_{ein}$), ein Phasenstrom ($I_{phase}$), die Phasenspannung ($U_{phase}$), der erste Phasenwinkel ($\beta$) und ein von der Phasenspannung ($U_{phase}$) und von dem Phasenstrom ($I_{phase}$) eingeschlossener zweiten Phasenwinkel ($\varphi$) eingangsseitig zugeführt sind.

18. Vorrichtung nach Anspruch 17, **dadurch gekennzeichnet, dass** der zweite Funktionsgenerator (15) den Leistungsamplitudenwert ($|P_{ein}|$) aus den zugeführten Grössen nach Massgabe der Formel

$$|P_{ein}| = 3 \cdot |U_{ein}| \cdot |I_{phase}| \cdot \cos(\beta + \varphi - \arcsin(\frac{|U_{ein}| \sin(\beta)}{|U_{phase}|}))$$

berechnet, wobei am Ausgang des zweiten Funktionsgenerators (15) der Leistungsamplitudenwert ($|P_{ein}|$) anliegt.

19. Vorrichtung nach Anspruch 13, **dadurch gekennzeichnet, dass** die erste Überwachungseinrichtung (9) zur Ausgabe eines ersten Überwachungssignals ($S_{ü1}$) und die zweite Überwachungseinrichtung (10) zur Ausgabe eines zweiten Überwachungssignals ($S_{ü2}$) und eines dritten Überwachungssignals ($S_{ü3}$) jeweils ausgangsseitig mit einem Eingang einer Logikschaltung (16) verbunden sind.

20. Vorrichtung nach den Ansprüchen 16 und 19, **dadurch gekennzeichnet, dass** die Logikschaltung (16) eine ODER-Verknüpfung zur Erzeugung eines Abtast-Halteauslösesignals ($S_{S/H}$) aus dem ersten Überwachungssignal ($S_{ü1}$), dem zweiten Überwachungssignal ($S_{ü2}$) und dem dritten Überwachungssignal ($S_{ü3}$) aufweist, und dass ein Ausgang der Logikschaltung (16) zur Ausgabe des Abtast-Halteauslösesignals ($S_{S/H}$) mit einem weiteren Eingang der Abtast-Halteeinrichtung (14) verbunden ist.

21. Vorrichtung nach Anspruch 20, **dadurch gekennzeichnet, dass** am Ausgang der Abtast-Halteeinrichtung (14) der erste Phasenwinkel ($\beta$) anliegt.

22. Vorrichtung nach einem der Ansprüche 11 bis 21, **dadurch gekennzeichnet, dass** die Regelungseinrichtung (2) in einem digitalen Mikroprozessor implementiert ist.

Fig. 1

**Fig. 2**

Europäisches
Patentamt

**EUROPÄISCHER RECHERCHENBERICHT**

Nummer der Anmeldung

EP 01 81 0352

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | US 5 329 222 A (GYUGYI ET AL) 12. Juli 1994 (1994-07-12) <br><br> * das ganze Dokument * | 1,3,7-9, 11,13, 17,18,22 | H02J3/18 |
| | | | **RECHERCHIERTE SACHGEBIETE (Int.Cl.7)** <br><br> H02J |

Der vorliegende Recherchenbericht wurde für alle Patentansprüche erstellt

| Recherchenort | Abschlußdatum der Recherche | Prüfer |
|---|---|---|
| MÜNCHEN | 17. September 2001 | Calarasanu, P |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 81 0352

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-09-2001

| Im Recherchenbericht angeführtes Patentdokument | Datum der Veröffentlichung | Mitglied(er) der Patentfamilie | Datum der Veröffentlichung |
|---|---|---|---|
| US 5329222 A | 12-07-1994 | KEINE | |

Für nähere Einzelheiten zu diesem Anhang : siehe Amtsblatt des Europäischen Patentamts, Nr. 12/82